# EUROPEAN PATENT SPECIFICATION

(11) **EP 0 454 095 B1**
(45) Date of publication and mention of the grant of the patent: **04.10.1995**
(21) Application number: 91106611.6
(22) Date of filing: 24.04.1991
(51) Int. Cl.: H01M 8/24

(54) **Solid oxide fuel cell and method for manufacturing the same**
Festoxidbrennstoffzellen und Verfahren zu deren Herstellung
Pile à combustible d'oxyde solide et sa méthode de fabrication

(30) Priority: 24.04.1990 JP 106610/90
(43) Date of publication of application: 30.10.1991
(73) Proprietor: YKK CORPORATION, Chiyoda-ku, Tokyo (JP)
(72) Inventor: Yoshimura, Takayoshi, Toyama-ken (JP); Arai, Toshio, Toyama-ken (JP); Sato, Masaki, Shimoniikawa-gun Toyama-ken (JP)
(74) Representative: Patentanwälte Leinweber & Zimmermann

(56) References cited:
- EP-A- 0 361 383
- DE-A- 1 935 973
- FR-A- 2 347 783
- US-A- 3 492 165
- US-A- 3 525 646
- US-A- 3 784 415
- PATENT ABSTRACTS OF JAPAN, vol. 13, no. 295 (E-783)[3643], 07 July 1989

## Description

### BACKGROUND OF THE INVENTION

### 1. Field of the Invention:

This invention relates to a solid oxide fuel cell that converts chemical potential directly into electric energy, thus generating electric power, and also to a method for manufacturing such a solid oxide fuel cell.

### 2. Description of the Related Art:

It is currently known that single cells of solid oxide fuel cell are constructed of inner electrode, electrolyte and outer electrode on the annular porous substrate tube. An interconnection extends from a predetermined section of the inner electrode for each respective single cell through the associated outer electrode and electrolyte. The inner electrode for a single cell is connected in series with the outer electrode for an adjacent single cell by the interconnection of single cell via a metallic felt. This prior art is exemplified by Japanese Patent Laid-Open Publication No. 130381/1982.

In putting a solid oxide fuel cell to practical use, it has hitherto been a significant aim to improve the efficiency of generating electric power; various studies have therefore been made to reduce the cell thickness to a minimum. In one of these studies, the thickness of the porous support tube, which serves to supply fuel gas to the electrodes, is reduced in an effort to more efficiently discharge the product of reaction and introduce the fuel gas to the electrodes, both of which are believed to be useful in improving the efficiency of generating electric power.

In the prior solid oxide fuel cell, however, partly since the electrodes, the electrolyte, the interconnections, etc. must be supported on the porous support tube, and partly since one single cell connected with another single cell in parallel or in series must be connected with the other single cell via a metallic felt, the thickness of the support tube must be thick enough to have a sufficient degree of strength and durability. It is also necessary to connect cells in parallel or in series via the metallic felt. Consequently assembling of the solid oxide fuel cell is difficult to achieve.

According to the precharacterizing clause of claim 1, the present invention starts from a prior art as known from JP-A-1-76671. In the known solid electrolyte fuel cell, hollow portions are partly defined by interconnectors and by airtight films.

In a solid electrolyte fuel cell known from DE-A-19 35 973, hollow portions shared by a multiplicity of single cells, are defined by the anode, a porous element and a casing, or by a conductor, the cathode, the electrolyte, the anode and said casing.

What is known from EP-A-0 361 383 is to provide a metal substrate with grooves and to form an air electrode on the surface of the substrate bridging a plurality of said grooves, wherein an intermediate substrate may be sandwiched between the metallic substrate and the air electrode.

The object underlying the invention is to provide a solid oxide fuel cell, in which leaking of gas supplied through the hollow portions is prevented without the provision of additional densing elements.

According to the invention, the above object is achieved by a solid oxide fuel cell according to claim 1. Respective manufacturing methods are claimed in claims 10 to 12. Preferred embodiments are subject of the subclaims.

Specifically, the substrate is dense in structure and hence gastight. The substrate is an insulator, such as alumina, a stabilized or partially-stabilized zirconia, or a mixture thereof. The porous support part is preferably made of a porous ceramics, which has open pores, such as alumina, a stabilized or partially-stabilized zirconia, or a mixture thereof.

The interconnection is made of an electrically conductive material which is stable in both an oxidized atmosphere and a reduced atmosphere. The electrically conductive material is exemplified by a perovskite-type oxide, which is LaCrO₃ doped with an alkaline earth metal.

The inner or outer electrode, which serves as an anode, is preferably made of Ni-zirconia cermet. The other electrode, which serves as a cathode, is preferably made of LaCoO₃ or LaMnO₃ doped with an alkaline earth metal. The electrolyte is preferably yttria stabilized zirconia.

Generally in the current technology, the film thickness of the porous substrate is 1.0 - 2.0 mm; that of the interconnection, 100 - 200 µm; that of the electrolyte, 100 - 200 µm; and that of each the anode and cathode, 100 - 200 µm. In this invention, it is possible to further reduce the thickness of the substrate from the described range.

The inner electrodes, the electrolyte, the outer electrodes and interconnections are made by conventional film fabrication technique such as the dry processing and the wet processing. The dry processing is exemplified by plasma spraying, flame spraying, chemical vapor deposition (CVD) and physical vapor deposition (PVD), while the wet processing is exemplified by the dipping method and the screen printing method. The inner electrodes, the electrolyte, the outer electrodes and the interconnections are formed at their respective predetermined positions by appropriate masking.

The porous support parts are formed by, for example, extrusion pressing and are then sintered. In the absence of the porous support part, the inner electrodes are formed by, for example, extrusion pressing and are then sintered or otherwise processed. These porous support parts or inner electrodes are attached to the surface of the substrate, whereupon another layer is formed over the resulting surface of the substrate by the previously described film fabrication technique.

Further, the electrolyte and the interconnections must be in dense-structure films, while the inner and outer electrodes must be formed in porous films. For example, the dense-structure films may be formed by plasma spraying, and the porous films may be formed by flame spraying.

The operation of the solid oxide fuel cell will now be described, with the inner and outer electrodes being assumed as an anode and a cathode, respectively. Hydrogen, for example, is supplied to the hollow portion. On the other hand, oxygen, for example, is supplied to the exterior of the cells. The cathode supplies electrons to the electrolyte, introducing oxygen to the surface thereof, and facilitates reaction between electrons and oxygen to produce O²⁻ ions. O²⁻ ions diffuse and migrate to the anode via oxygen vacancies in the electrolyte. Upon arrival at the interface between the electrolyte and the anode, O²⁻ ions eject the electrons to become oxygen. The oxygen reacts with the hydrogen arrived at the interface between the anode and the electrolyte, via the porous support part or directly, from the hollow portion, resulting in the oxygen and hydrogen being converted into water and electric energy being generated.

The above and other advantages, features and additional objects of this invention will be manifest to those versed in the art upon making reference to the following detailed description and the accompanying drawings in which several preferred embodiments incorporating the principles of this invention are shown by way of illustrative examples.

### BRIEF DESCRIPTION OF THE DRAWINGS

FIGS. 1 through 4 are fragmentary cross-sectional views of different fuel cell stacks according to various embodiments of this invention;
FIG. 5 is a schematic cross-sectional view of a fuel cell module according another embodiment of the invention;
FIG. 6 is a schematic plan view of the fuel cell stack of this invention;
FIG. 7 is a cross-sectional view taken along line VIII-VIII of FIG. 6;
FIG. 8 is a fragmentary plan view of a further modified fuel cell stack according to still another embodiment;
FIG. 9 is a cross-sectional view taken along line X-X of FIG. 8;
FIG. 10 is a cross-sectional view taken along line XI-XI of FIG. 8;
FIGS. 11(a) through 11(e) show the order of process steps in which a fuel cell is progressively manufactured according to a method of the invention; and
FIGS. 12(a) through 12(c) show the order of process steps in which a fuel cell is progressively manufactured according to another method of the invention.

### DETAILED DESCRIPTION

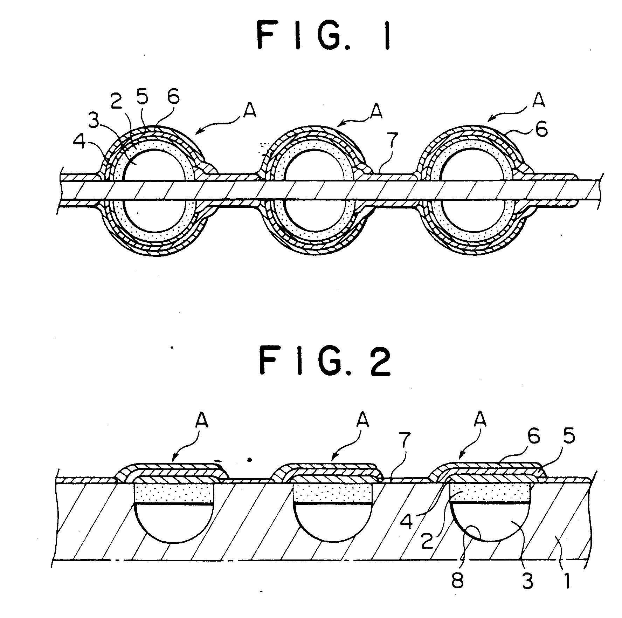

The principles of this invention are particularly useful when embodied in a solid oxide fuel cell (hereinafter also called "fuel cell") such as shown in FIG. 1.

In FIG. 1, which shows a first embodiment, reference numeral 1 designates a 3 mm-thick dense substrate of alumina. The substrate 1 has a multiplicity of single cells A at desired distances. A multiplicity of 0.5 mm-thick porous support parts 2 of alumina are disposed one at each of the single cells A so as to form a hollow portion 3 thereat. Over each porous support part 2, a 100 µm-thick inner electrode 4 of Ni-zirconia cermet, a 100 µm-thick layer of electrolyte 5 of yttria-stabilized zirconia and a 100 µm-thick outer electrode 6 of LaMnO₃ doped with Sr are laminated over one another to provide each single cell A.

The single cells A are connected in series by a multiplicity of interconnections 7 each extending from the inner electrode 4, at its portion contiguous to the substrate 1, of the associated single cell A to the outer electrode 6 of the adjacent single cell A through the electrolyte 5 of the associated single cell A. In the first embodiment of FIG. 1, the series-connected single cells A at one side of the substrate 1 are the mirror image of those at the other side; that is, the single cells A are arranged in symmetry relative to the substrate 1.

Each hollow portion 3 has a semi-cylindrical contour, and each of the inner electrodes 4 and outer electrodes 6 has a semi-tubular cross section. Also each porous support part 2 has a semi-tubular cross section.

FIG. 2 shows a second embodiment, in which parts or elements similar or corresponding to those of FIG. 1 are designated by the same reference numerals. In this embodiment, the substrate 1 has a multiplicity of recesses 8 for forming each hollow portion 3. A multiplicity of porous support parts 2 are each received in the mouth of each recess 8 so as to form a hollow portion 3. Over each porous support part 2, the inner electrode 4, the electrolyte 5 and the outer electrode 6 are laminated one over another in this order to provide each single cell A. These single cells A are connected by a multiplicity of interconnections 7 each extending from the inner electrode 4 of the associated single cell A to the outer electrode 6 of the adjacent single cell A.

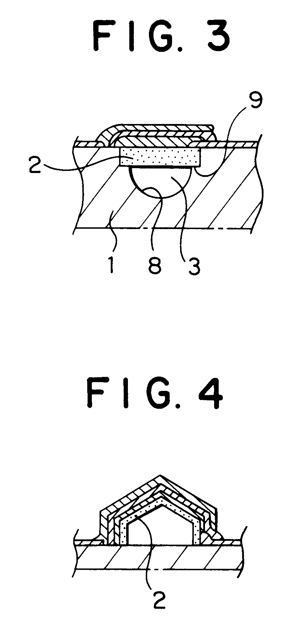

FIG. 3 shows a third embodiment, in which each porous support part 2 is placed on a step 9 in the mouth of the individual recess 8 so that the porous support part 2 can be received in the associated recess 8 with improved stability.

FIG. 4 shows a fourth embodiment, in which each porous support part 2 has a polygonal cross-sectional shape.

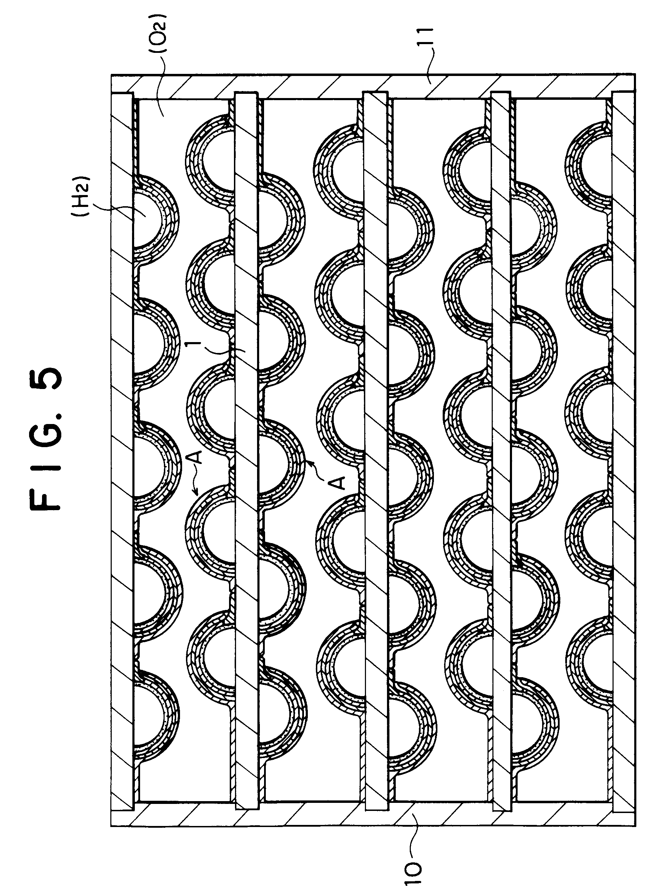

FIG. 5 shows a different-type fuel cell module as a fifth embodiment. In this embodiment, the individual single cells A on opposite sides of each substrate 1 are arranged in stagger, namely, in asymmetry relative to the substrate 1. Each substrate 1 is connected at opposite ends to a cathode collector 10 and an anode collector 11, respectively.

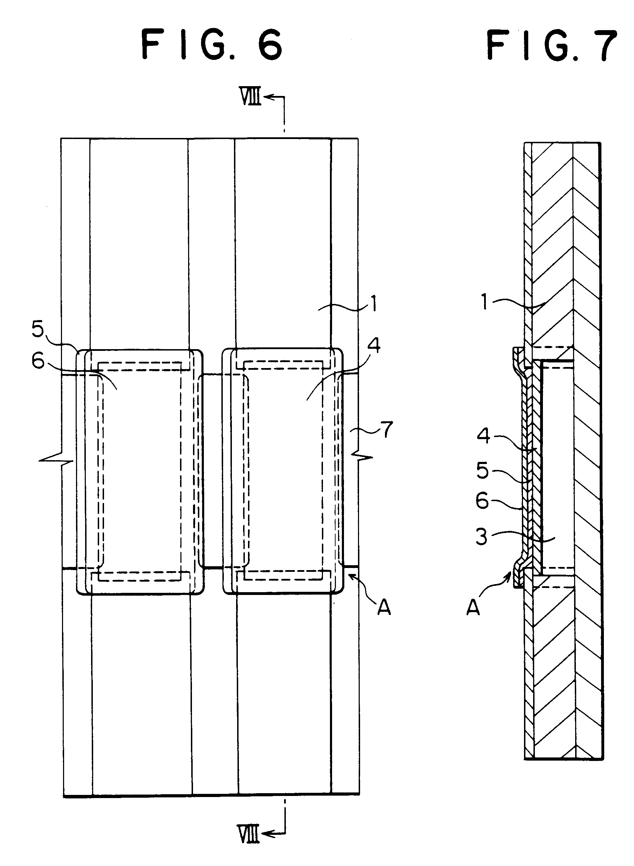

FIGS. 6 and 7 schematically show the overall fuel cell stack of this invention. In production, using alumina as a raw material, a plate-like portion and a multiplicity of semi-cylindrical portions are integrally formed by extrusion. Then a multiplicity of holes are formed at desired distances, namely, one at each prospective single cell A, whereupon a substrate 1 is obtained by sintering. On the substrate 1, a multiplicity of semi-tubular inner electrodes 4 are formed one at each single cell A. A multiplicity of interconnections 7 are also formed on the substrate 1 in such a manner that each interconnection 7 is extended from the inner electrode 4 to a position spaced to a predetermined distance from an adjacent inner electrode 4. In addition, an electrolyte 5 and an outer electrode 6 are laminated over each of the resulting single cells A so that each single cell is connected in series with the adjacent single cell to jointly provide a solid oxide fuel cell.

In the conventional structure using a porous substrate or tube, a dense film is placed over the surface of the non-power-generating portion in an effort to prevent gas flowing in the porous substrate or tube from leakage. Or the non-power-generating portion itself is a separate dense structure joined with the power-generating portion. According to this invention, it is unnecessary to make these measures so that the manufacturing steps to be associated with such measures can be omitted.

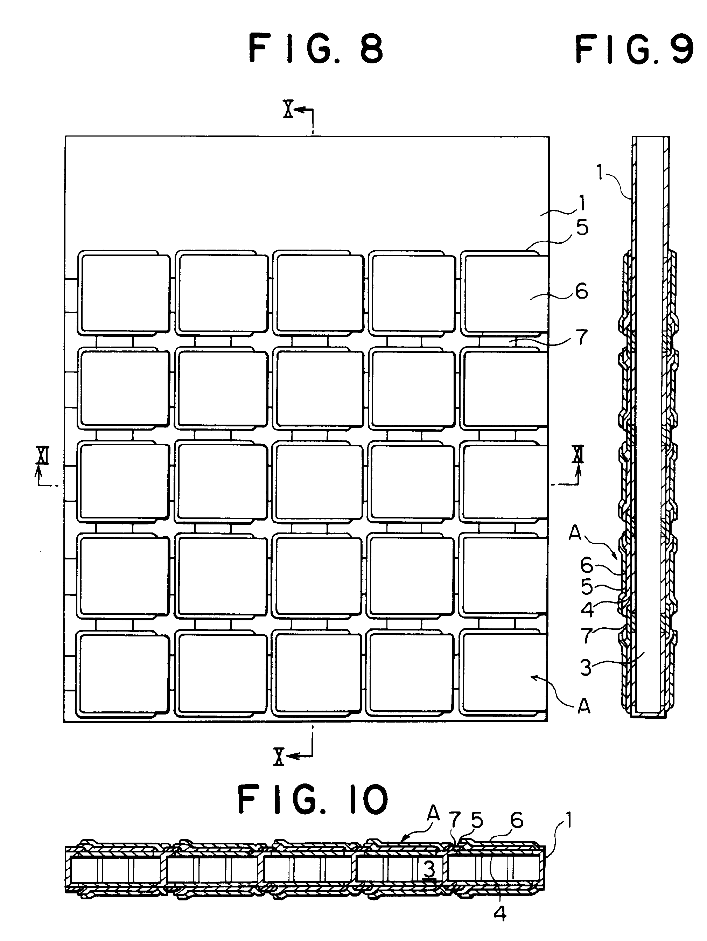

FIGS. 8, 9 and 10 schematically show a different-type fuel cell stack of this invention. In production, using alumina as a raw material, the dense substrate having a multiplicity of hollow portions is formed by extrusion pressing and then closed at one end of each hollow portion. Then at each hollow portion, a hole is made in which an inner electrode 4 is to be laid. On the substrate 1, a multiplicity of inner electrodes 4 are laid on each hole. A multiplicity of interconnections 7 are also formed on the substrate 1 in such a manner that each interconnection 7 extends between the adjacent single cells. In addition, an electrolyte 5 and an outer electrode 6 are laminated over each of the resulting single cells A so that the adjacent single cells are interconnected in series and in parallel to jointly provide a solid oxide fuel cell. Specifically, FIG. 9 shows the adjacent single cells interconnected in parallel, while FIG. 10 shows the adjacent single cells interconnected in series.

The arrangement of FIGS. 8, 9 and 10 can produce the same result as that of FIGS. 6 and 7. Further, by appropriate masking, it is possible to obtain a solid oxide fuel cell in which the adjacent single cells are interconnected both in parallel and in series simultaneously.

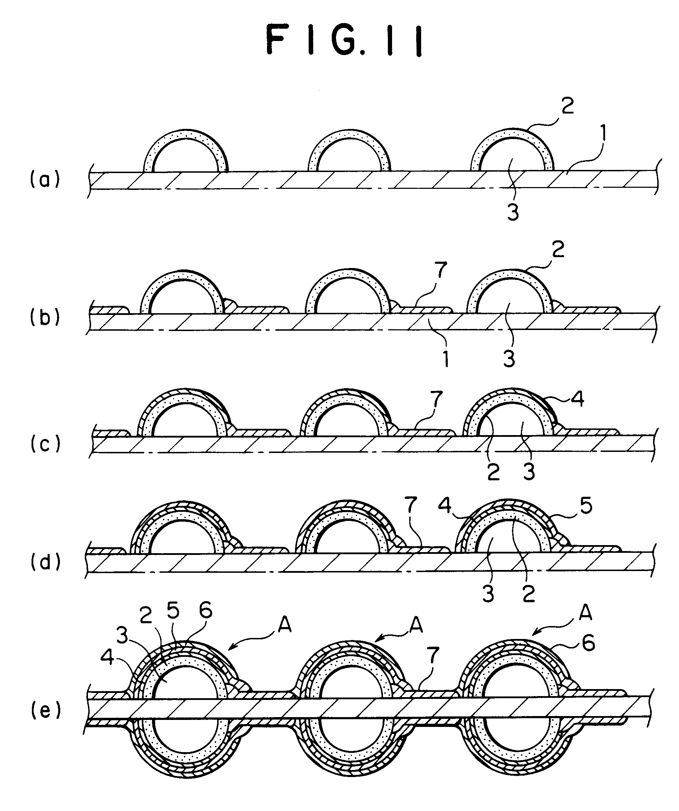

FIGS. 11(a) through 11(e) show a typical manufacturing method of this invention. First of all, as shown in FIG. 11 (a), a multiplicity of porous support parts 2 to form a hollow portion 3 are arranged on the surface of the dense substrate 1 at equal distances. Although this process actually is carried out on each surface of the substrate 1, such process for the opposite surface is omitted from FIGS. 11(a) through 11(d) for clarity.

Then, as shown in FIG. 11(b), a multiplicity of interconnections 7 are formed on the substrate 1 in such a manner that each interconnection 7 extends from one end of the respective porous support part 2 toward and slightly short of the adjacent porous support part 2. FIG. 11(c) shows the inner electrodes 4 formed on the surface of each porous support part 2, while FIG. 11(d) shows the electrolyte 5 formed on the surface of the respective inner electrode 4 of FIG. 11(c). And FIG. 11(e) shows the outer electrodes 6 formed on the respective electrolyte 5. At this stage, the outer electrodes 6 are connected with each of the interconnections 7.

Thus the fuel cell of FIG. 1 has been obtained. Alternatively, the processes of FIGS. 11(a) through 11(c) may be carried out firstly on one surface of the subtrate and then the same processes may be done on the other surface.

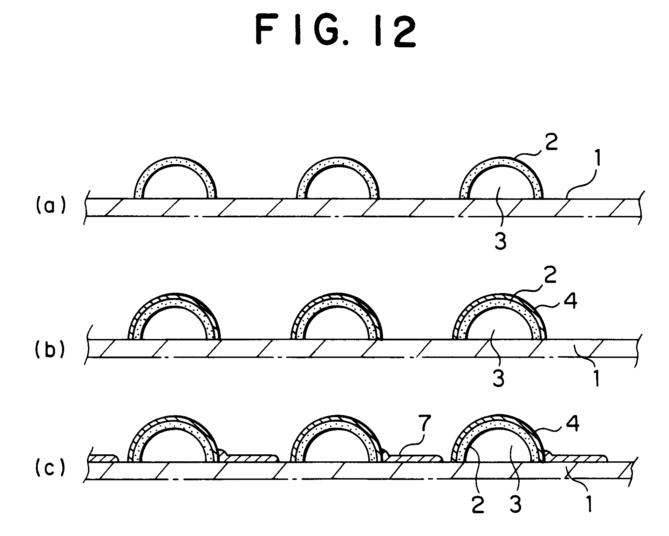

FIGS. 12(a) through 12(c) show a modification of the method of FIGS. 11(a) through 11(c). The individual inner electrodes 4, as shown in FIG. 12(b), are formed on the surface of each of the porous support parts 2 arranged at equal distances as shown in FIG. 12(a). Then, as shown in FIG. 12(c), a multiplicity of interconnections 7 are formed on the substrate in such a manner that each interconnection 7 extends from one end of the associated inner electrode 4 toward and slightly short of the adjacent inner electrode 4. The remaining processes are carried out in the same manner of FIGS. 11(d) and 11(e). As a result, the fuel cell stack of FIG. 1 has been produced.

According to this invention, since the single cells are supported by a substrate, it is possible to reduce the thickness of porous support part supporting the individual single cell or to get out of use the porous support part extremely so that gas supply to the electrolyte can be performed smoothly, thus improving the efficiency of generating electric power and also minimizing both the size and weight of the entire fuel cell stack. Further, since the individual single cells are connected on a common substrate in series and/or in parallel, it is possible to assemble the entire cell module simply by connecting these single cell stacks in parallel.

Furthermore, according to the manufacturing method of this invention, it is possible to manufacture the solid oxide fuel cell which causes the foregoing advantageous results.

## Claims

1. A solid oxide fuel cell comprising:
(a) a substrate (1), which is dense in structure and gastight;
(b) a multiplicity of single cells (A) each including one inner electrode (4), one outer electrode (6) and one electrolyte (5) between said inner and outer electrodes (4, 6) said multiplicity of single cells (A) also including at least a hollow portion (3);
(c) a multiplicity of interconnections (7) connecting said single cells (A) with one another in series and/or in parallel,
characterized in that
said hollow portions (3) are each defined by two elements, namely
on the one hand by said substrate (1) and on the other hand, by a porous support part (2) supporting said inner electrode (4) or by said inner electrodes (4) itself.

2. The solid oxide fuel cell according to claim 1, characterized in that said support parts (2) or inner electrodes (4), respectively, each have a polygonal or semi-cylindrical contour and are disposed on said substrate (1).

3. The solid oxide fuel cell according to claim 1 or 2, characterized in that said substrate (1) has on its surface at least one groove over which one of said support parts (2) or inner electrodes (4), respectively, is disposed.

4. The solid oxide fuel cell according to any one of claims 1 to 3, characterized in that said substrate (1) has at a predetermined position on its surface at least one hole over which one of said support parts (2) or inner electrodes (4), respectively, is disposed.

5. The solid oxide fuel cell according to any one of claims 1 to 4, characterized in that said single cells (A) are arranged on both surfaces of said substrate (1).

6. The solid oxide fuel cell according to claim 5, characterized in that said single cells (A) are arranged on opposite surfaces of said substrate (1) in mirror-image symmetry relative to said substrate (1).

7. The solid oxide fuel cell according to claim 5, characterized in that said single cells (A) are arranged on opposite surfaces of said substrate (1) in asymmetry relative to said substrate (1).

8. The solid oxide fuel cell according to any one of claim 1 to 7, characterized in that each of said porous support parts (2) or inner electrodes (4), respectively, is received in a mouth of a recess (8) in said substrate (1).

9. The solid oxide fuel cell according to claim 8, characterized in that said recess (8) has a step (9) in the mouth of said recess (8), each of said porous support parts (2) or inner electrodes (4), respectively, being supported on said step (9).

10. A method for manufacturing a solid oxide fuel cell, comprising the steps of:
(a) providing a substrate (1);
(b) providing a multiplicity of inner electrodes (4) each for a single cell (A) on the surface of said substrate (1), so that said inner electrodes (4) each define a hollow portion (3) together with said substrate (1);
(c) forming on said substrate (1) a multiplicity of interconnections (7) each extending from one end of one of said inner electrodes (4) to a position spaced a predetermined distance from an adjacent inner electrode (4) to connect said single cells (A) in series;
(d) forming an electrolyte (5) on an outer surface of each of said inner electrodes (4); and
(e) then forming an outer electrode (6) on each of said electrolytes (5) in such a manner that said outer electrodes (6) are each connected to an interconnection (7) of an adjacent single cell (A).

11. A method for manufacturing a solid oxide fuel cell, comprising the steps of:
(a) providing a substrate (1);
(b) providing a multiplicity of porous support parts (2) each for a single cell (A) on the surface of said substrate (1), so that said porous support parts (2) each define a hollow portion (3) together with said substrate (1);
(c) forming an inner electrode (4) over each of said porous support parts (2);
(d) forming on said substrate (1) a multiplicity of interconnections (7) each extending from one end of one of said inner electrodes (4) to a position spaced a predetermined distance from an adjacent inner electrode (4) to connect said single cells (A) in series;
(e) forming an electrolyte (5) on an outer surface of each of said inner electrodes (4); and
(f) then forming an outer electrode (6) on each of said electrolytes (5) in such a manner that said outer electrodes (6) are each connected to an interconnection (7) on an adjacent single cell (A).

12. A method for manufacturing a solid oxide fuel cell, comprising the steps of:
(a) providing a substrate (1);
(b) providing a multiplicity of porous support parts (2) each for a single cell (A) on the surface of said substrate (1), so that said porous support parts (2) each define a hollow portion (3) together with said substrate (1);
(c) forming on said substrate (1) a multiplicity of interconnections (7) each extending from one end of one of said porous support parts (2) to a position spaced a predetermined distance from an adjacent porous support part (2) to connect said single cells (A) in series;
(d) forming an inner electrode (4) over each of said porous support parts (2);
(e) forming an electrolyte (5) on an outer surface of each of said inner electrodes (4); and
(f) then forming an outer electrode (6) on each of said electrolytes (5) in such a manner that said outer electrodes are each connected to an interconnection (7) of an adjacent single cell (A).

## Patentansprüche

1. Festoxid-Brennstoffzelle aufweisend:
a) einen Grundträger (1) von kompakter Struktur, der gasdicht ist;
b) eine Vielzahl von Einzelzellen (A), die jeweils eine einzige innere Elektrode (4), eine einzige äußere Elektrode (6) und einen einzigen Elektrolyten zwischen der inneren (4) und der äußeren Elektrode (6) beinhalten, wobei die Vielzahl von Einzelzellen (A) auch mindestens einen hohlen Bereich (3) beinhaltet;
c) eine Vielzahl von Verbindungsleitungen (7), die die Einzelzellen (A) miteinander in Serie und/ oder parallel verbinden;
dadurch gekennzeichnet, daß
die hohlen Bereiche (3) von zwei Elementen begrenzt werden, und zwar
einerseits durch den Grundträger (1), und andererseits durch ein poröses, die innere Elektrode (4) abstützendes Stützteil (2) oder durch die innere Elektrode (4) selbst;

2. Festoxid-Brennstoffzelle nach Anspruch 1, dadurch gekennzeichnet, daß die Stützteile (2) bzw. die inneren Elektroden (4) jeweils einen polygonalen oder halbzylindrischen Umriß haben und auf dem Grundträger (1) angeordnet sind.

3. Festoxid-Brennstoffzelle nach Anspruch 1 oder 2, dadurch gekennzeichnet, daß der Grundträger (1) auf seiner Oberfläche mindestens eine Nut hat, über der eines der Stützteile (2) bzw. inneren Elektroden (4) angeordnet ist.

4. Festoxid-Brennstoffzelle nach einem der Ansprüche 1 bis 3, dadurch gekennzeichnet, daß der Grundträger (1) an einer vorbestimmten Position auf seiner Oberfläche mindestens ein Loch hat, über dem eines der Stützteile (2) bzw. inneren Elektroden (4) angeordnet ist.

5. Festoxid-Brennstoffzelle nach einem der Ansprüche 1 bis 4, dadurch gekennzeichnet, daß die Einzelzellen (A) auf beiden Flächen des Grundträgers (1) angeordnet sind.

6. Festoxid-Brennstoffzelle nach Anspruch 5, dadurch gekennzeichnet, daß die Einzelzellen (A) auf gegenüberliegenden Flächen des Grundträgers (1) spiegelsymmetrisch bezüglich des Grundträgers (1) angeordnet sind.

7. Festoxid-Brennstoffzelle nach Anspruch 5, dadurch gekennzeichnet, daß die Einzelzellen (A) auf gegenüberliegenden Flächen des Grundträgers (1) asymmetrisch bezüglich des Grundträgers (1) angeordnet sind.

8. Festoxid-Brennstoffzelle nach einem der Ansprüche 1 bis 7, dadurch gekennzeichnet, daß jedes der porösen Stützteile (2) bzw. inneren Elektroden (4) in der Mündung einer Ausnehmung (8) in diesem Grundträger (1) eingelassen ist.

9. Festoxid-Brennstoffzelle nach Anspruch 8, dadurch gekennzeichnet, daß die Ausnehmung (8) eine Stufe (9) in der Mündung der Ausnehmung (8) hat, wobei jedes der porösen Stützteile (2) bzw. inneren Elektroden (4) auf der Stufe (9) aufliegt.

10. Verfahren zur Herstellung einer Festoxid-Brennstoffzelle, das die folgenden Schritte umfaßt:
a) Vorsehen eines Grundträgers (1);
b) Vorsehen einer Vielzahl von inneren Elektroden (4), und zwar jeweils eine pro Einzelzelle (A) auf der Oberfläche des Grundträgers (1), so daß die inneren Elektroden (4) zusammen mit dem Grundträger (1) jeweils einen hohlen Bereich (3) begrenzen;
c) Ausbilden einer Vielzahl von Verbindungsleitungen (7) auf dem Grundträger, von denen sich jede von einem Ende einer der inneren Elektroden (4) zu einer Position erstreckt, die einen vorbestimmten Abstand zu einer benachbart liegenden inneren Elektrode besitzt, um die Einzelzellen (A) in Serie zu verbinden;
d) Ausbilden eines Elektrolyten (5) auf einer Außenfläche von jeder der inneren Elektroden (4); und anschließend
e) Ausbilden einer äußeren Elektrode (6) aufjedem der Elektrolyten (5) in solcher Weise, daß jede der äußeren Elektroden (6) mit einer Verbindungsleitung (7) von einer benachbarten Einzelzelle (A) verbunden ist.

11. Verfahren zur Herstellung einer Festoxid-Brennstoffzelle, das die folgenden Schritte umfaßt:
a) Vorsehen eines Grundträgers (1);
b) Vorsehen einer Vielzahl von porösen Stützteilen (2), und zwar jeweils eines pro Einzelzelle (A) auf der Oberfläche des Grundträgers (1), so daß die porösen Stützteile (2) zusammen mit dem Grundträger (1) jeweils einen hohlen Bereich (3) begrenzen;
c) Ausbilden einer inneren Elektrode (4) über jedem der porösen Stützteile (2);
d) Ausbilden einer Vielzahl von Verbindungsleitungen (7) auf dem Grundträger, von denen sich jede von einem Ende einer der inneren Elektroden (4) zu einer Position erstreckt, die einen vorbestimmten Abstand zu einer benachbart liegenden inneren Elektrode besitzt, um die Einzelzellen (A) in Serie zu verbinden;
e) Ausbilden eines Elektrolyten (5) auf einer Außenfläche von jeder der inneren Elektroden (4); und anschließend
f) Ausbilden einer äußeren Elektrode (6) aufjedem der Elektrolyten (5) in solcher Weise, daß jede der äußeren Elektroden (6) mit einer Verbindungsleitung (7) von einer benachbarten Einzelzelle (A) verbunden ist.

12. Verfahren zur Herstellung einer Festoxid-Brennstoffzelle, das die folgenden Schritte umfaßt:
a) Vorsehen eines Grundträgers (1);
b) Vorsehen einer Vielzahl von porösen Stützteilen (2), und zwar jeweils eines pro Einzelzelle (A) auf der Oberfläche des Grundträgers (1), so daß die porösen Stützteile (2) zusammen mit dem Grundträger (1)jeweils einen hohlen Bereich (3) begrenzen;
c) Ausbilden einer Vielzahl von Verbindungsleitungen (7) auf dem Grundträger, von denen sich jede von einem Ende einer der porösen Stützteile (2) zu einer Position erstreckt, die einen vorbestimmten Abstand zu einem benachbart liegenden porösen Stützteil (2) besitzt, um die Einzelzellen (A) in Serie zu verbinden;
d) Ausbilden einer inneren Elektrode (4) über jedem der porösen Stützteile (2);
e) Ausbilden eines Elektrolyten (5) auf einer Außenfläche von jeder der inneren Elektroden (4); und anschließend
f) Ausbilden einer äußeren Elektrode (6) aufjedem der Elektrolyten (5) in solcher Weise, daß jede der äußeren Elektroden (6) mit einer Verbindungsleitung (7) von einer benachbarten Einzelzelle (A) verbunden ist.

## Revendications

1. Pile à combustible à oxyde solide comprenant :
(a) un substrat (1) qui a une structure dense et est étanche aux gaz;
(b) une multiplicité de piles individuelles (A) comprenant chacune une seule électrode intérieure (4), une seule électrode extérieure (6) et un seul électrolyte (5) entre lesdites électrodes intérieure et extérieure (4, 6), ladite multiplicité de piles individuelles (a) comprenant aussi au moins une partie creuse (3);
(c) une multiplicité d'interconnexions (7) connectant lesdites piles individuelles (A) les unes aux autres en série et/ou en parallèle,
caractérisée en ce que:
lesdites parties creuses (3) sont définies chacune par deux éléments, à savoir, d'une part, par ledit substrat (1) et, d'autre part, par une partie de support poreuse (2) supportant ladite électrode intérieure (4) ou par lesdites électrodes intérieures (4) elles-mêmes.

2. Pile à combustible à oxyde solide selon la revendication 1, caractérisée en ce que lesdites parties de support (2) ou lesdites électrodes intérieures (4) respectivement, présentent chacune un contour polygonal ou semi-cylindrique et sont disposées sur ledit substrat (1).

3. Pile à combustible à oxyde solide selon la revendication 1 ou 2, caractérisée en ce que ledit substrat (1) comporte, sur sa surface, au moins une rainure au-dessus de laquelle une des parties de support (2) ou une desdites électrodes intérieures (4), respectivement, est disposée.

4. Pile à combustible à oxyde solide selon l'une quelconque des revendications 1 à 3, caractérisée en ce que ledit substrat (1) comporte, à un endroit prédéterminé sur sa surface, au moins un trou au-dessus duquel une desdites parties de support (2) ou une desdites électrodes intérieures (4), respectivement, est disposée.

5. Pile à combustible à oxydant solide selon l'une quelconque des revendications 1 à 4, caractérisée en ce que lesdites piles individuelles (A) sont disposées sur les deux faces dudit substrat (1).

6. Pile à combustible à oxyde solide selon la revendication 5, caractérisée en ce que lesdites piles individuelles (A) sont disposées sur les faces opposées du substrat (1) de façon symétrique comme des images dans un miroir par rapport audit substrat (1).

7. Pile à combustible à oxyde solide selon la revendication 5, caractérisée en ce que lesdites piles individuelles (A) sont disposées sur les faces opposées dudit substrat (1) de façon asymétrique par rapport audit substrat (1).

8. Pile à combustible à oxyde solide selon l'une quelconque des revendications 1 à 7, caractérisée en ce que chacune desdites parties de support poreuses (2) ou des électrodes intérieures (4), respectivement, est reçue dans l'embouchure d'un évidement (8) dudit substrat (1).

9. Pile à combustible à oxyde solide selon la revendication 8, caractérisée en ce que ledit évidement (8) comporte un épaulement (9) dans l'embouchure dudit évidement (8), chacune desdites parties de support poreuses (2) ou desdites électrodes intérieures (4), respectivement, étant supportée par ledit épaulement (9).

10. Procédé pour fabriquer une pile à combustible à oxyde solide, comprenant les étapes consistant à:
(a) préparer un substrat (1);
(b) préparer une multiplicité d'électrodes intérieures (4) à raison d'une pour chaque pile individuelle (A) sur la surface dudit substrat (1), de manière que lesdites électrodes intérieures (4) définissent chacune une partie creuse (3) conjointement avec ledit substrat (1);
(c) former sur ledit substrat (1) une multiplicité d'interconnexions (7) s'étendant chacune depuis une des extrémités d'une desdites électrodes intérieures (4) jusqu'à un endroit espacé d'une distance prédéterminée d'une électrode intérieure adjacente (4), de manière à connecter en série lesdites piles individuelles (A).
(d) former un électrolyte (5) sur la surface extérieure de chacune desdites électrodes intérieures (4); et
(e) former ensuite une électrode extérieure (6) sur chacun desdits électrolytes (5) de manière telle que lesdites électrodes extérieures (6) soient connectées chacune à une interconnexion (7) d'une pile individuelle adjacente (A).

11. Procédé pour fabriquer une pile à combustible à oxyde solide, comprenant les étapes consistant à:
(a) préparer un substrat (1);
(b) préparer une multiplicité de parties de support poreuses (2) à raison d'une pour chaque pile individuelle (A) sur la surface dudit substrat (1), de manière que lesdites parties de support poreuses (2) définissent chacune une partie creuse (3) conjointement avec ledit substrat (1);
(c) former une électrode intérieure (4) au-dessus de chacune desdites parties de support poreuses (2);
(d) former sur ledit substrat (1) une multiplicité d'interconnexions (7) s'étendant chacune depuis une extrémité d'une desdites électrodes intérieures (4) jusqu'à un endroit espacé d'une distance prédéterminée d'une électrode intérieure adjacente (4), de manière à connecter en série lesdites piles individuelles (A);
(e) former un électrolyte (5) sur la surface extérieure de chacune desdites électrodes (4); et
(f) former ensuite une électrode extérieure (6) sur chacun desdits électrolytes (5) de manière telle que lesdites électrodes extérieures (6) soient connectées chacune à une interconnexion (7) d'une pile individuelle adjacente (A).

12. Procédé pour fabriquer une pile à combustible à oxyde solide comprenant les étapes consistant à :
(a) préparer un substrat (1);
(b) préparer une multiplicité de parties de support poreuses (2) à raison d'une pour chaque pile individuelle (A) sur la surface dudit substrat (1), de manière que lesdites parties de support poreuses (2) définissent chacune une partie creuse (3) conjointement avec ledit substrat (1);
(c) former sur ledit substrat (1) une multiplicité d'interconnexions (7) s'étendant chacune depuis une des extrémités d'une des parties de support poreuses (2) jusqu'à un endroit espacé d'une distance prédéterminée d'une partie de support poreuse adjacente (2), de manière à connecter en série lesdites piles individuelles (A);
(d) former une électrode intérieure (4) au-dessus de chacune des parties de support poreuses (2);
(e) former un électrolyte (5) sur une surface extérieure de chacune desdites électrodes intérieures (4);
(f) former ensuite une électrode extérieure (6) sur chacun desdits électrolyte (5) d'une manière telle que lesdites électrodes extérieures soient connectées chacune à une interconnexion (7) d'une pile individuelle adjacente (A).
